# FASCICULE DE BREVET EUROPEEN

(11) **EP 0 573 355 B1**
(45) Date de publication et mention de la délivrance du brevet: **12.03.1997**
(21) Numéro de dépôt: 93401410.1
(22) Date de dépôt: 02.06.1993
(51) Int. Cl.: F16B 7/04, E04B 2/76

(54) **Bloc de liaison et d'assemblage pour barres profilées et assemblage de barres en faisant application**
Block zur Verbindung bzw. Montage von Profilstäben und daraus hergestelle Montage von Profilstäben
Connecting block for profiled bars and bar assembly using same

(30) Priorité: 03.06.1992 FR 9206941
(43) Date de publication de la demande: 08.12.1993
(73) Titulaire: Gautreau, André Bernard Jacques, F-46100 Figeac (FR)
(72) Inventeur: Gautreau, André Bernard Jacques, F-46100 Figeac (FR)
(74) Mandataire: Polus, Camille

(56) Documents cités:
- EP-A- 0 233 525
- EP-A- 0 460 360
- DE-A- 3 923 578
- DE-U- 8 604 195
- FR-A- 2 653 836

## Description

La présente invention est relative au domaine de la liaison et de l'assemblage de barres profilées et elle vise, plus spécifiquement, le domaine des barres profilées à section droite transversale polygonale et comportant, sur l'une au moins de leur face longitudinale, une rainure en T ouverte.

On connaît depuis quelques temps déjà l'existence de barres profilées à section circulaire ou polygonale qui sont réalisées en de nombreux matériaux différents et qui sont destinées à permettre la construction et l'érection de structures diverses pouvant aller de l'échafaudage ou analogue à des ossatures porteuses à caractère temporaire ou définitif, jusqu'à des bâtis de machines à caractère modulaire ou non.

Si de telles barres profilées présentent, sans aucun doute, des avantages de résistance mécanique, de coût économique relativement faible et de facilité d'adaptation, notamment par coupe à longueur voulue, les méthodes d'assemblage jusqu'à présent connues ne peuvent pas être considérées comme donnant satisfaction sur plusieurs points.

En règle générale, il est proposé d'avoir recours à des sortes de noix constituées par des demi-coquilles assemblables qui sont conçues pour enserrer deux barres devant être assemblées, pour former avec ces dernières un noeud de liaison.

De telles noix ne sont pas esthétiquement convenables, techniquement adaptées à tous les modes d'assemblage et, par conséquent, ne peuvent pas être mises en oeuvre dans toutes les applications, en particulier lorsque des assemblages bout à bout et/ou dans un même plan doivent être assurés.

Un autre inconvénient devant être porté au compte de telles structures en demi-coquilles enserrant les barres, tient au fait que leur forme enveloppant les barres confère au noeud d'assemblage réalisé un encombrement dans les trois plans qui représentent le plus souvent une sujétion importante, lorsqu'il convient de définir avec les barres des plans rigoureux servant, par exemple, de bancs de fixation pour des appareillages divers ou pour la construction de modules fonctionnels.

Un autre inconvénient connu de ces moyens de liaison réside dans l'impossibilité de constituer de façon pratique, efficace et certaine, des liaison dites à fixation positive, à même de s'opposer à tout risque de glissement relatif d'une barre par rapport à l'autre.

On a certainement proposé aussi des moyens plus simples de liaison de barres en prévoyant entre les faces à lier des opérations d'usinage Longues et coûteuses permettant d'insérer des moyens de fixation par collier, vis, tirant, etc... ou d'interposer entre Les barres une plaque fixée à celles-ci par des boulons (DE-U-8 604 195).

De tels moyens souffrent de tous les inconvénients précédents et ne peuvent pas être considérés comme offrant une capacité d'assemblage et d'érection rapide, sûre, efficace. De tels moyens posent, par ailleurs, des problèmes pratiques lorsque L'assemblage doit intervenir sur un site où une énergie d'appoint, telle que l'électricité, fait défaut pour l'alimentation des appareils d'usinage.

L'objet de l'invention est de pallier les inconvénients ci-dessus en proposant un bloc de liaison et d'assemblage unique pour différents modes de liaison susceptibles d'intervenir entre des barres profilées, tels que par exemple une liaison bout à bout, une liaison dans deux plans parallèles ou une liaison dans un même plan.

L'objet de l'invention est conçu pour permettre aussi la constitution de noeuds d'assemblage à partir d'un nombre de barres supérieur à deux ou encore de barres dont la section droite transversale représente un multiple entier d'un même module constructif de base.

Un autre objet de l'invention, est de proposer un bloc de liaison ne nécessitant aucun usinage préalable tant sur lui-même que sur les barres à assembler et permettant de réaliser une liaison rapide, efficace, positive, sans appoint d'énergie et par simple emboîtement et vissage.

Un autre objet de l'invention est de proposer un bloc de liaison et d'assemblage qui puisse être obtenu facilement par moulage, par exemple en coquille, sans exiger d'opérations importantes de reprise d'usinage secondaire.

Un objet supplémentaire de l'invention est de proposer un bloc de liaison et d'assemblage qui s'inscrive dans le profil des barres à assembler, de manière à permettre l'obtention de noeuds de liaison de même encombrement que la section droite transversale des barres et offrant, supplémentairement, un caractère esthétique qui, s'il n'est pas fondamental pour les caractéristiques techniques de la liaison et de l'assemblage réalisés, permet néanmoins la construction et l'érection de structures de lignes tendues et pures, susceptibles d'offrir des faces planes, aptes notamment à constituer des bancs de soutien pour la construction d'ensembles de machines ou d'installations à caractère modulaire ou non.

Un avantage supplémentaire attaché au bloc de liaison et d'assemblage selon l'invention réside dans le fait que sa mise en oeuvre et son adaptation peuvent être réalisées rapidement par un personnel non spécialement hautement qualifié, ce qui permet de réduire le coût global de création, de réalisation, de construction d'une structure à base de barres profilées.

Pour atteindre les objectifs ci-dessus, Le bloc de Liaison et d'assemblage pour barres profilées selon L'invention est caractérisé par La partie caractérisante de La revendication 1.

L'invention a également pour objet un assemblage de barres profilées réalisé au moyen d'au moins un bloc du type ci-dessus.

Diverses autres caractéristiques ressortent de la description faite ci-dessous en référence aux dessins annexés qui montrent, à titre d'exemples non limitatifs, des formes de réalisation de l'objet de l'invention.

La Fig. 1 est une perspective éclatée d'un noeud d'assemblage et de liaison de deux barres profilées, à partir d'un bloc conforme à l'invention.

Les Fig. 2 et 3 sont des coupes prises respectivement selon les plans II-II et III-III de la Fig. 1.

Les Fig. 4, 5, 6 et 7 sont des perspectives illustrant quatre exemples d'assemblage de barres profilées au moyen du bloc selon l'invention.

La Fig. 8 est une perspective analogue à la Fig. 1 illustrant une variante de réalisation.

La Fig. 9 est une perspective éclatée d'une autre forme de réalisation.

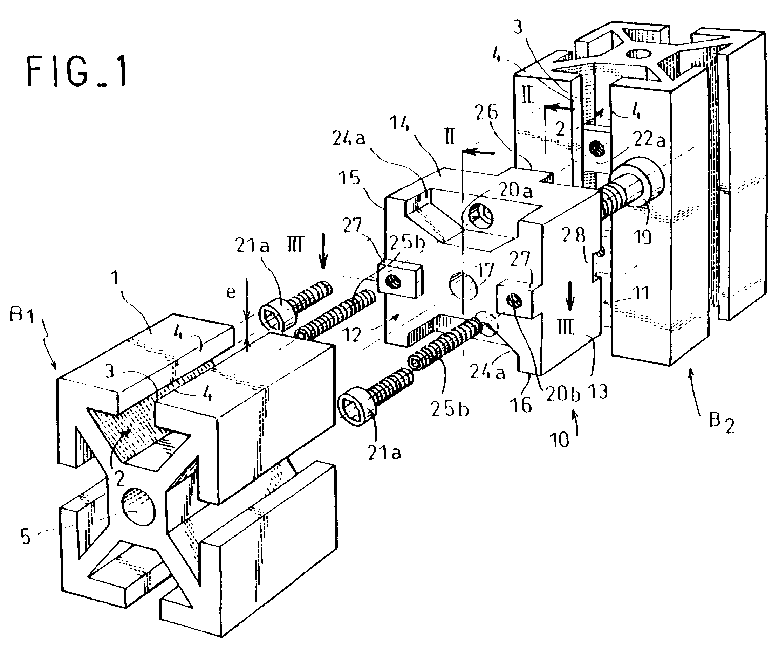

Selon le premier exemple de réalisation illustré par les Fig. 1 à 3, le bloc de liaison et d'assemblage selon l'invention est conçu pour permettre la constitution de noeuds d'assemblage entre des éléments de barres profilées, tels que B₁ et B₂, présentant une construction et une structure identiques ou semblables. Dans l'exemple illustré, chaque barre B₁ ou B₂ est du type à section droite transversale, polygonale, de préférence, carrée ou rectangulaire et comporte, sur au moins une face latérale **1**, au moins une rainure en T inversé **2** dont l'entrée **3** est délimitée par deux bords **4** rectilignes se faisant face et présentant une épaisseur **e**, de préférence, constante. Les barres **B**_{**1**} et **B**_{**2**} peuvent ne comporter qu'une seule rainure en T ou, comme cela est illustré aux dessins, une rainure en T pour chacune des faces longitudinales, voire plusieurs pour chaque face. Chaque barre **B**_{**1**} ou **B**_{**2**} peut aussi comporter, de fabrication ou par reprise ultérieure, au moins un pasage **5**, par exemple axial, de section droite constante.

Le bloc de liaison et d'assemblage selon l'invention est constitué par un corps massif **10**, de forme générale parallélèpipèdique rectangle, définissant deux faces latérales **11** et **12** présentant une conformation géométrique qui est, de préférence, la même que la section droite transversale de la barre **B**_{**1**} ou de la barre **B**_{**2**}.

Le corps massif **10** présente ainsi un pourtour constitué de quatre faces **13** à **16** se réunissant à angle droit dans l'exemple illustré et définissant l'épaisseur du corps massif **10**.

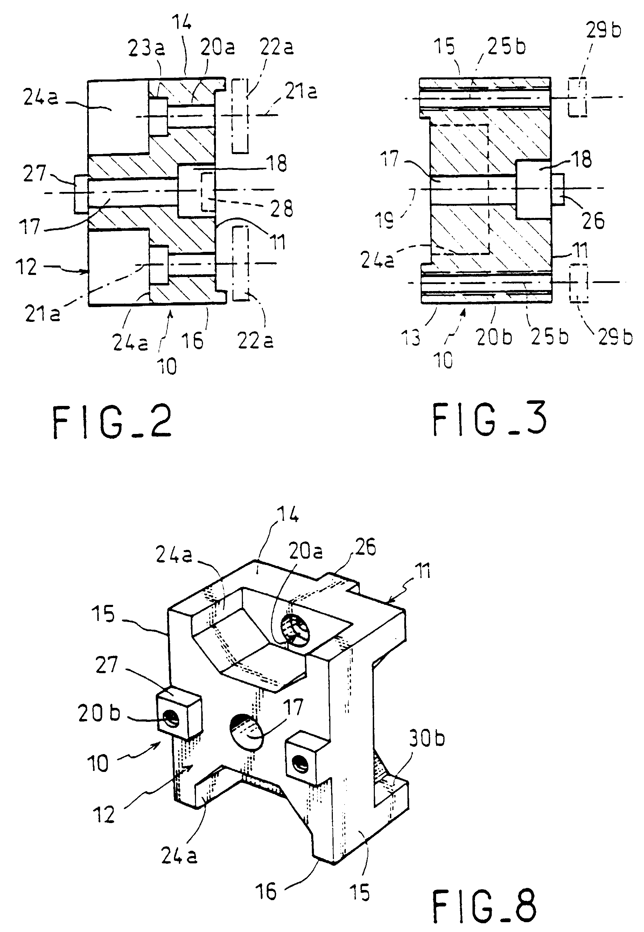

Les **Fig. 2** et **3** montrent plus en détail que le corps massif **10** est percé dans son épaisseur et en son centre d'un alésage traversant **17** qui s'ouvre sur la face **12** par un lamage **18**. L'alésage traversant **17** est ménagé selon des coordonnées qui permettent une coïncidence avec le passage **5**, lorsque le bloc est disposé en bout de la barre **B**_{**1**} ou **B**_{**2**}. Dans le cas illustré, l'alésage traversant est pratiqué au centre de la section droite transversale du bloc. L'alésage **17** et le lamage **18** sont réservés au montage d'une vis autotaraudeuse à tête **19** destinée à assurer la fixation possible, en bout de l'élément de barre **B**_{**1**}, par exemple, par engagement autotaraudé de la vis **19** dans le passage axial **5**. Dans un tel cas, la face latérale **11** du corps massif **10** est alors appliquée sur la face transversale en bout de l'élément de barre **B**_{**1**}.

Suivant une autre disposition constructive, le corps massif **10** est percé selon deux plans orthogonaux, tels que les plans II et III, de deux séries de trous traversants **20a** et **20b** qui, dans l'exemple illustré, sont prévus, pour chaque série, à égale distance, de part et d'autre de l'alésage axial **17**. Les trous **20a** de la première série sont, de préférence, réservés au montage de vis **21a** coopérant au-delà de la face **12** avec un ou des écrous lardons **22a** dont la conformation est choisie pour pouvoir être engagés à l'intérieur d'une rainure en T **2** derrière les bords longitudinaux **4**. Les écrous lardons **22a** peuvent ainsi être prévus individuels pour chaque vis **20a** ou, au contraire, être réalisés sous la forme d'une barrette unique présentant deux taraudages aptes à recevoir simultanément les deux vis **21a**. De préférence, les trous **20a** débouchent par des lamages **23a** dans des dégagements d'accès **24a** qui sont ménagés dans le bloc massif **10**, à partir de la face latérale **12** opposée à celle offrant le lamage **18** de l'alésage central **17**, pour s'ouvrir sur les faces transversales **14** et **16**.

Les trous **20b** de la seconde série orthogonale à la première sont, dans un premier exemple, constitués par des passages taraudés traversants qui débouchent sur les deux faces latérales **11** et **12** et qui sont destinés à recevoir des vis **25b** dont la longueur axiale est, dans un exemple de réalisation, voisine de mais au plus égale à l'épaisseur du corps massif **10**.

Selon une autre disposition constructive, l'une au moins des faces latérales **11**, **12** et, de préférence, les deux, comporte, en relief et en alignement avec les faces de contour correspondantes, des saillies dont la largeur est égale, au jeu de pénétration près, à la largeur des entrées **3** et dont l'épaisseur est égale à l'épaisseur **e**. Les saillies, portant les références **26** et **27**, respectivement pour les faces **11** et **12**, sont constituées par des masses prismatiques qui sont, de préférence, au nombre de deux pour chaque face en étant alignées entre elles et formées en correspondance des séries de trous, c'est-à-dire avec la série des trous **20a** pour la face **11** et avec la série de trous **20b** pour la face **12** et en étant centrées sur les plans II et III.

De préférence, aussi, la face **11** dépourvue des dégagements **24a** présente des encoches **28** de conformation conjuguée aux masses prismatiques **27** et ménagées de façon homologue à ces dernières.

Le bloc décrit ci-dessus permet de réaliser différents types d'assemblage dont un exemple est illustré par la **Fig. 1**.

Le bloc **10** peut être adapté sur l'élément de barre **B**_{**1**} en étant placé en bout de cet élément, de telle sorte qu'une liaison angulaire soit établie par l'engagement de la ou des saillies **27** dans les rainures **2** correspondantes, lorsque par exemple l'élément de barre **B**_{**1**} comporte une rainure **2** sur chacune de ses faces longitudinales. La liaison axiale est assurée par montage de la vis **19** dans le trou **17**, de manière à assurer un engagement par autotaraudage dans le passage **5** permettant un serrage d'immobilisation efficace. Une liaison positive axiale et angulaire est ainsi établie.

L'assemblage avec l'élément de barre **B**_{**2**} fait intervenir l'engagement de la barrette ou des écrous lardons **22a** dans la rainure en T offerte par la face de l'élément **B**_{**2**} en vis à vis. Les masses prismatiques **26** peuvent alors être engagées dans cette rainure, de manière que les vis **21a** puissent coopérer avec la barrette ou les écrous lardons **22a** pour serrer la face latérale **11** du bloc **10** contre la face longitudinale correspondante de l'élément de barre **B**_{**2**} avec pincement efficace des bords **4** entre les écrous lardons **22a** et la face **11**.

Une liaison angulaire et un blocage axial efficaces entre l'élément de barre **B**_{**2**} et le bloc **10** sont ainsi établis.

Un blocage axial positif supplémentaire peut être obtenu en vissant les vis **25b** dans les trous **20b**, de telle sorte que les extrémités correspondantes, saillant à partir de la face **11** puissent agir à la manière de vis cuvettes par poinçonnage partiel et serrage sur la face longitudinale correspondante de l'élément de barre **B**_{**2**}.

Il convient de remarquer que le noeud d'assemblage, ainsi réalisé, présente le même encombrement que la section droite transversale des éléments de barre **B**_{**1**} et **B**_{**2**} et qu'il peut être obtenu par de simples opérations d'emboîtement et de vissage.

Il convient aussi de noter que les vis **21a** sont aisément accessibles par l'intermédiaire des dégagements **24a** et peuvent ainsi être entraînées en rotation sur une plage angulaire partielle, mais néanmoins importante, en raison de l'ouverture ou du débouché de chaque dégagement **24a** sur les faces transversales **14** et **16**. Il en est de même pour les vis **25b** accessibles directement à partir des rainures en T **2**.

La mise en oeuvre du bloc, comme dit ci-dessus en référence avec la **Fig. 1**, permet de réaliser un noeud d'assemblage dans lequel les éléments de barre **B**_{**1**} et **B**_{**2**} sont disposés dans un même plan avec une liaison en bout pour l'une des deux barres.

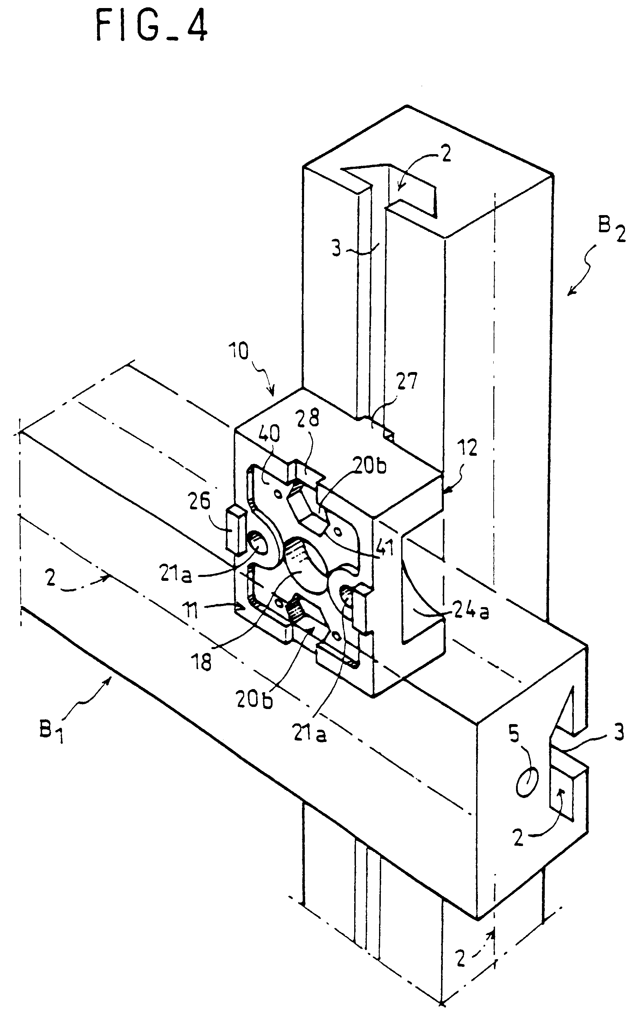

La **Fig. 4** montre un autre exemple de liaison et d'assemblage possible entre les éléments **B**_{**1**} et **B**_{**2**}, alors disposés dans deux plans parallèles. Dans un tel cas, le bloc **10** peut être monté par exemple sur l'élément de barre **B**_{**2**}, au moyen des vis **25b** dont la longueur, supérieure à l'épaisseur du bloc, permet la coopération avec des écrous lardons **29b** (**Fig. 3**) qui sont engagés dans la rainure **2** de la face correspondante de la barre **B**_{**2**}. Comme dans l'exemple précédent, les écrous lardons **29b** peuvent aussi être remplacés par une barrette présentant deux trous taraudés. Dans un tel cas, les trous **20b** taraudés sont remplacés par des trous lisses ou encore les vis **25b** sont choisies d'un diamètre juste inférieur à celui des trous **20b** pour permettre un libre déplacement axial.

L'élément de barre **B**_{**1**} est ensuite fixé sur le bloc **10** par l'intermédiaire des vis **21a** coopérant avec les écrous lardons **22a**.

Dans un tel cas, la vis **19** n'est pas montée. Il pourrait, toutefois, être envisagé, dans certains cas, d'assurer la liaison du corps **10** sur l'élément de barre **B**_{**2**}, uniquement au moyen de la vis **19** amenée à coopérer avec un écrou lardon engagé dans la rainure **2**, par laquelle le bloc est immobilisé angulairement par pénétration des masses prismatiques **27**.

Dans cet exemple d'assemblage, le bloc massif **10** permet de constituer un noeud dont l'encombrement, hormis le décalage de plan voulu entre les éléments de barre **B**_{**1**} et **B**_{**2**}, s'inscrit exactement dans la section transversale desdits éléments.

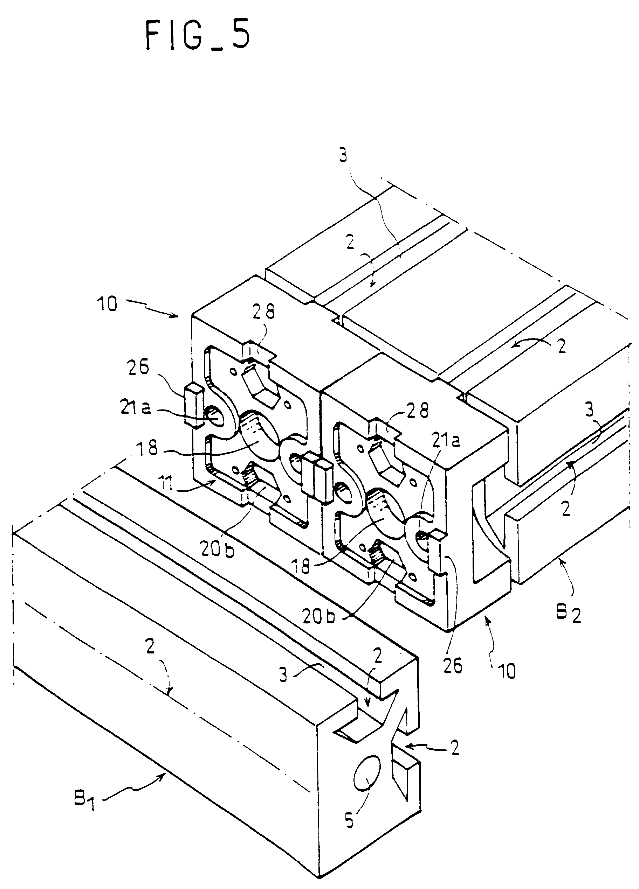

La **Fig. 5** montre un exemple de mise en oeuvre de l'objet de l'invention pour établir la liaison entre un élément de barre **B**_{**1**} et deux éléments de barre **B**_{**2**} disposés côte à côte. Un tel noeud est obtenu en mettant alors en oeuvre deux blocs de liaison **10** qui sont montés en bout des deux éléments de barre **B**_{**2**}, comme dit précédemment, pour pouvoir être fixés ensuite par les deux vis **21a** extrêmes sur l'élément de barre **B**_{**1**}.

Il doit être considéré que les deux éléments de barre **B**_{**2**} peuvent être indépendants et séparés ou encore constituer un élément de barre unique dont le module transversal est le double de l'élément unitaire décrit en référence à la **Fig. 1**.

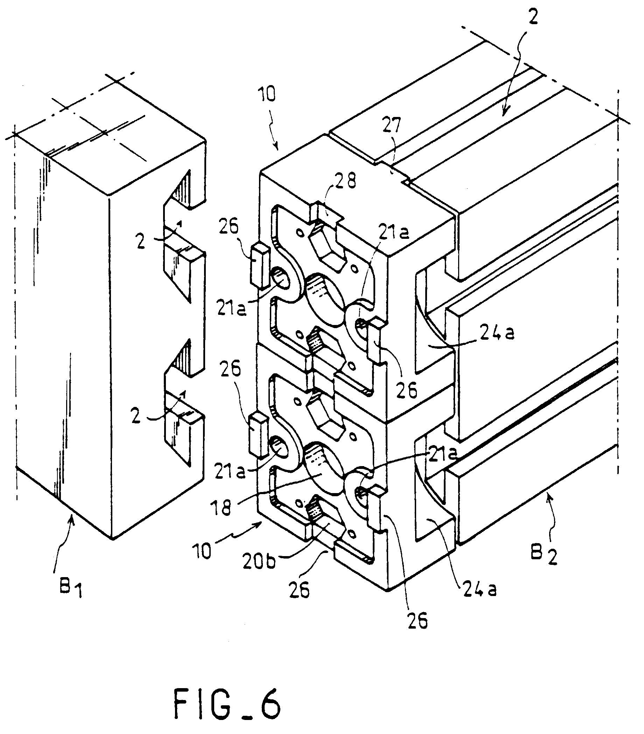

La **Fig. 6** montre une autre variante, à partir de deux blocs **10** disposés en bout de deux éléments de barre **B**_{**2**} simples ou d'un élément de barre **B**_{**2**} double, pour établir un noeud de liaison avec un élément de barre **B**_{**1**} présentant en section droite transversale un module double de l'élément, selon la **Fig. 1**, et offrant sur une face longitudinale deux rainures en T inversées **2**.

Comme dans l'exemple selon la **Fig. 5**, les références portées sur la **Fig. 6** permettent de déterminer l'orientation de montage des deux corps **10** qui sont tout d'abord adaptés en bout du ou des éléments de barre **B**_{**2**}.

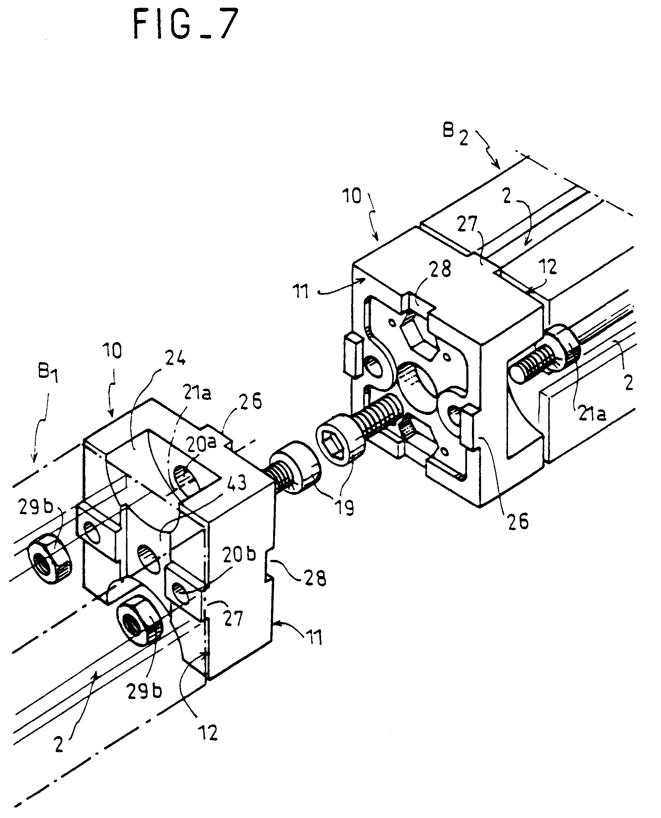

La **Fig. 7** montre un autre exemple d'assemblage dans lequel les éléments de barre **B**_{**1**} et **B**_{**2**}, du type de la **Fig. 1**, doivent être assemblés bout à bout. Dans un tel cas, chaque élément de barre reçoit un corps massif **10** monté par l'intermédiaire de la vis **19**, de manière que chacun d'eux soit appliqué en bout de l'élément de barre correspondant par la face **12**.

L'adaptation de chaque corps massif **10** est effectuée avec décalage de 90°, de manière à faire coopérer, par engagement réciproque relatif, les masses prismatiques **26** de l'un des corps massifs **10** avec les encoches **28** du corps massif en vis à vis. Les éléments de barre **B**_{**1**} et **B**_{**2**} sont ensuite disposés bout à bout pour être liés par la mise en place des vis **21a** vissées dans les trous **20b**.

Comme dans les exemples précédents, un assemblage positif axial et angulaire est ainsi obtenu.

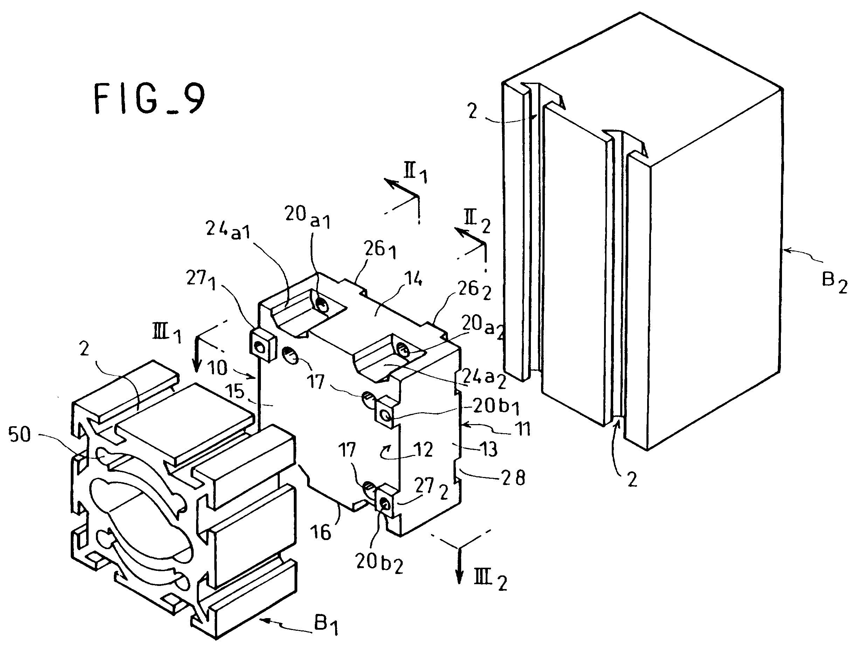

La **Fig. 8** montre une variante de réalisation consistant à ménager des dégagements **30**_{**b**} dans la face **11** en adoptant un décalage de 90° par rapport aux dégagements **24a**, de telle sorte que les dégagements **30b** s'ouvrent sur les faces transversales **13** et **15**.

Outre, les dispositions ci-dessus, la **Fig. 4** montre une variante d'exécution consistant à ménager dans la face **11**, par exemple, un chambrage **40** laissant subsister une bordure périphérique **41** qui est favorable à l'établissement d'un bon appui de la face **11** sur la face longitudinale de l'élément **B**_{**1**}, par exemple.

De même, les trous **20b** peuvent déboucher dans des empreintes négatives **42** ménagées dans le fond du chambrage **40** et, par exemple hexagonales, pour recevoir des écrous prisonniers sertis pour le montage des vis **25b**.

Il peut aussi être prévu, comme cela est donné en **Fig. 7**, de ménager un dégagement **43** dans la face **12** entre les saillies **27** pour favoriser l'accumulation de copeaux en cas d'utilisation d'une vis autotaraudeuse **19** apte à coopérer avec le passage **5**.

La **Fig. 9** montre une variante de réalisation de l'objet de l'invention adapté à la liaison de barres **B**_{**1**} et **B**_{**2**} qui comportent plusieurs rainures **2** sur au moins une face longitudinale et, de préférence mais non exclusivement, deux sur chacune d'elles. Dans cet exemple, il peut être considéré que chaque secteur ou quadrant de la section droite transversale, incluant une arête longitudinale, présente une même conformation que celle de l'exemple de la **Fig. 1**. Selon la **Fig. 9**, l'intersection des plans **P**_{**1**} et **P**_{**2**} passant par les rainures, situées de part et d'autre d'une même arête, définit l'axe d'un passage **50** semblable au passage **5**.

Le bloc **10** de liaison et d'assemblage comprend, alors, sur la base de l'exemple initial mais en adaptation à la section droite transversale des barres **B**_{**1**} et **B**_{**2**} de l'exemple selon la **Fig. 2**, deux séries doubles de trous traversants **20a**_{**1**} et **20a**_{**2**} prévues selon les plans II₁ et II₂ et **20b**_{**1**} et **20b**_{**2**} prévues selon les plans III₁ et III₂. Aux trous **20a**_{**1**} et **20a**_{**2**} correspondent les dégagements **24a**_{**1**} et **24a**_{**2**}, ainsi que les masses prismatiques **26**_{**1**} et **26**_{**2**}. De même, aux trous **20b**_{**1**} et **20b**_{**2**} correspondent les masses prismatiques **27**_{**1**} et **27**_{**2**}, ainsi que les encoches **28**_{**1**} et **28**_{**2**}.

Le bloc **10** selon cet exemple comprend aussi des alésages débouchant **60** qui sont ménagés pour être placés en coïncidence des passages **50** et permettre le montage de vis **19** s'engageant par autotaraudage dans lesdits passages.

L'invention n'est pas limitée aux exemples décrits et représentés, car diverses modifications peuvent y être apportées sans sortir de son cadre.

## Revendications

1. Bloc de liaison et d'assemblage destiné à immobiliser ensemble des barres profilées, ce bloc comprenant :
- un corps massif (10) possédant, en plan, une section transversale polygonale ;
- deux faces latérales (11, 12) ;
- au moins un alésage (17) s'étendant à travers le corps (10) ;
- au moins un lamage (18) ménagé sur une desdites faces latérales dans le prolongement de l'alésage (17), cet alésage (17) étant adapté pour loger une vis dont la tête est reçue dans le lamage (18) ;
- des séries orthogonales de trous traversants (20a, 20b) réservés au montage de vis de serrage et de fixation (21a, 25b) ;
- sur l'une au moins des faces et pour les trous d'une même série, des dégagements en creux (24a), s'ouvrant sur le pourtour du corps et donnant accès aux vis de serrage et de fixation correspondant auxdits trous, et
- au moins une saillie (26, 27) placée sur chacune des faces latérales (11, 12), chacune de ces saillies (26, 27) possédant une largeur maximale prédéterminée adaptée pour coopérer avec une rainure en T réalisée sur une face longitudinale d'une barre profilée à laquelle le bloc est destiné à être fixé.

2. Bloc selon la revendication 1, caractérisé en ce que les dégagements sont ménagés à partir de la face latérale (**12**) opposée à celle (**11**) présentant le ou les lamages (**18**).

3. Bloc selon la revendication 1 ou 2, caractérisé en ce que des dégagements (**24a**) et (**30b**) sont ménagés à partir d'une des faces latérales pour les trous d'une série et à partir de l'autre pour ceux d'une autre série.

4. Bloc selon la revendication 1, caractérisé en ce que les vis de serrage et de fixation sont associées pour certaines au moins à des écrous lardons (**22a, 29b**) aptes à être engagés dans la rainure en T.

5. Bloc selon la revendication 1 ou 4, caractérisé en ce que les vis de serrage et de fixation (**25b**) correspondant à l'une des séries de trous sont montées dans des taraudages que présentent lesdits trous.

6. Bloc selon la revendication 1, caractérisé en ce que les saillies (**26**, **27**) sont constituées par des masses prismatiques formées en relief sur chaque face latérale en étant alignées par deux en correspondance des séries de trous.

7. Bloc selon la revendication 1 ou 6, caractérisé en ce que les saillies (**27**) présentent une épaisseur au plus égale à l'épaisseur des bords (**4**) de la barre définissant sur la face longitudinale l'entrée (**3**) de la rainure en T (**2**).

8. Bloc selon la revendication 1 ou 2, caractérisé en ce que la face latérale, opposée à celle présentant les dégagements, comporte des encoches (**28**) de forme conjuguées et alignées aves les saillies de la face latérale opposée.

9. Bloc selon la revendication 1 ou 2, caractérisé en ce que l'une au moins des faces (**11**, **12**) présente en retrait un chambrage (**40**) laissant subsister une bordure périphérique d'appui (**41**).

10. Bloc selon la revendication 1, caractérisé en ce que les trous (**20b**) débouchent sur la face (**11**) par des empreintes négatives (**42**) aptes à retenir des écrous prisonniers sertis.

11. Bloc selon la revendication 1, 2 ou 9, caractérisé en ce que la face (**12**) présente un dégagement (**43**) entre les saillies (**24**).

12. Assemblage de barres profilées comprenant au moins deux barres (**B**_{**1**}, **B**_{**2**}) dont l'une est pourvue en bout d'au moins un bloc selon l'une des revendications 1 à 8 et dont l'autre est assujettie audit bloc par l'une de ses faces longitudinales offrant au moins une rainure en T.

13. Assemblage de barres profilées comprenant au moins deux barres (**B**_{**1**}**, B**_{**2**}) s'étendant orthogonalement dans deux plans parallèles et assujetties l'une à l'autre par au moins un bloc selon l'une des revendications 1 à 11, adaptées sur les faces longitudinales se faisant face et présentant chacune au moins une rainure en T.

14. Assemblage de barres profilées comprenant deux barres (**B**_{**1**}**, B**_{**2**}) assujetties bout à bout au moyen de deux blocs selon l'une des revendications 1 à 11.

## Patentansprüche

1. Verbindungs- und Montageblock zum Befestigen von ProfilStangen, wobei der Block aufweist:
- einen massiven Körper (10), der in der Ebene einen polygonalen Querschnitt aufweist;
- zwei Seitenflächen (11, 12);
- zumindest eine Bohrung (17), welche durch den Körper (10) verläuft;
- zumindest eine Einsenkung (18), die auf einer der Seitenflächen in Verlängerung der Bohrung (17) angeordnet ist, wobei die Bohrung (17) zum Unterbringen einer Schraube geeignet ist, deren Kopf in der Einsenkung (18) aufnehmbar ist;
- orthogonale Reihen von Durchgangslöchern (20a, 20b), die zur Montage von Spann- und Befestigungsschrauben (21a, 25b) vorgesehen sind;
- Ausnehmungen (24a) auf wenigstens einer der Flächen und für die Löcher einer gleichen Reihe, die am Umfang des Körpers offen sind und zugang zu den Spann- und Befestigungsschrauben entsprechend diesen Löchern geben, und
- zumindest einen Vorsprung (26, 27), der auf jeder der Seitenflächen (11, 12) angeordnet ist, wobei jeder der Vorsprünge (26, 27) eine maximale Größe aufweist, die derart vorbestimmt ist, daß er mit einer T-Nut zusammenwirken kann, die auf einer Längsfläche einer Profilstange realisiert ist, auf der der Block zu befestigen ist.

2. Block nach Anspruch 1, dadurch gekennzeichnet, daß die Ausnehmungen ausgehend von der Seitenfläche (12) angeordnet sind, die derjenigen (11) gegenüberliegt, welche die Einsenkung oder die Einsenkungen (18) aufweist.

3. Block nach Anspruch 1 oder 2, dadurch gekennzeichnet, daß die Ausnehmungen (24a) und (30b) derart angeordnet sind, daß sie von einer der Seitenflächen für die Löcher einer Reihe ausgehen und von der anderen für die Löcher einer anderen Reihe ausgehen.

4. Block nach Anspruch 1, dadurch gekennzeichnet, daß die Spann- und Befestigungsschrauben gewissen Stellmuttern (22a, 29b) zugeordnet sind, die mit der T-Nut in Eingriff bringbar sind.

5. Block nach Anspruch 1 oder 4, dadurch gekennzeichnet, daß die Spann- und Befestigungsschrauben (25b), welche einer der Lochreihen entsprechen, in Innengewinden montiert sind, welche die Löcher aufweisen.

6. Block nach Anspruch 1, dadurch gekennzeichnet, daß die Vorsprünge (26, 27) durch prismatische Körper gebildet sind, die erhaben auf jeder Seitenfläche gebildet sind und zu zweit übereinstimmend mit der Lochreihe angeordnet sind.

7. Block nach Anspruch 1 oder 6, dadurch gekennzeichnet, daß die Vorsprünge (27) eine Dicke aufweisen, die höchstens gleich der Dicke der Ränder (4) der Stange ist, welche auf der Längsfläche den Bingang (3) der T-Nut (2) definiert.

8. Block nach Anspruch 1 oder 2, dadurch gekennzeichnet, daß die Seitenfläche, die derjenigen, welche die Ausnehmungen aufweist, gegenüberliegt, Aussparungen (28) aufweist, welche den Vorsprüngen der gegenüberliegenden Seitenfläche zugeordnet und mit ihnen ausgerichtet sind.

9. Block nach Anspruch 1 oder 2, dadurch gekennzeichnet, daß zumindest die eine der Flächen (11, 12) eine zurückliegende Kammer (40) aufweist, die einen peripherischen Stützrand (41) bildet.

10. Block nach Anspruch 1, dadurch gekennzeichnet, daß die Löcher (20b) auf der Fläche (11) durch negative Vertiefungen (42) hervortreten, die eingesetzte Preßmittern zurückhalten können.

11. Block nach Anspruch 1, 2 oder 9 dadurch gekennzeichnet, daß die Fläche (12) eine Ausnehmung (43) zwischen den Vorsprüngen (24) aufweist.

12. Anordnung von Profilstangen mit zumindest zwei Stangen (B₁, B₂), von denen die eine am Ende mit zumindest einem Block gemäß einem der Ansprüche 1 bis 8 versehen ist und von denen die andere an dem Block über eine ihrer Längsflächen, die zumindest eine T-Nut bilden, hängt.

13. Anordnung von Profilstangen mit zumindest zwei Stangen (B₁, B₂), die sich orthogonal in zwei parallelen Ebenen erstrecken und aneinander durch zumindest ein Block gemäß einem der Ansprüche 1 bis 11 hängen, welche mit den Längsflächen gegenüberliegend angeordnet sind und jeweils zumindest eine T-Nut aufweisen.

14. Zusammenbau von Profilstangen mit zwei Stangen (B₁, B₂), die Ende an Ende mittels zweier Blöcke gemäß einem der Ansprüche 1 bis 11) zusammenhängen.

## Claims

1. Connecting and assembling unit intended to immobilise profiled bore together, this unit comprising:
- a solid body (10) having, in plan view, a polygonal cross-section;
- two lateral faces (11, 12);
- at least one bore (17) extending through the body (10);
- at least one recess (18) provided on one of the said lateral faces in the extention of the bore (17), this bore (17) being adapted to accomodate a screw of which the head is received in the recess (18);
- orthogonal series of through holes (20a, 20b) reserved for the mounting or tightening and fixing screws (21a, 25b);
- on one at least of the faces end for the holes of one end the same series, hollow clearances (24a) which open on the periphery of the body end give access to the tightening end fixing screws corresponding to the said holes, and
- at least one projection (25, 27) placed on each of the lateral faces (11, 12), each of these projections (26, 27) having a predetermined maximum width which is adapted so as to co-operate with a T-shaped groove produced on a longitudinal face of a profiled bar which the block is intended to be fixed.

2. Unit as claimed in Claim 1, characterised in that the clearances are provided starting from the lateral face (12) opposite the one (11) having the recess or recesses (18).

3. Unit as claimed in Claim 1 or 2, characterised in that clearances (24a and 30b) are provided starting from one of the lateral faces for the holes of one series and starting from the other for those of another series.

4. Unit as claimed in Claim 1, characterised in that the tightening and fixing screws are associated, for certain ones at least, with plug nuts (22a, 29b) capable of being engaged in the T-shaped groove.

5. Unit as claimed in Claim 1 or 4, characterised in that the tightening and fixing screws (25b) corresponding to one of the series or holes are mounted in tappings in the said holes.

6. Unit as claimed in Claim 1, characterised in that the projections (26, 27) consist of raised prismatic blocks which are formed on each lateral face and are aligned in twos corresponding to the series of holes.

7. Unit as claimed in Claim 1 or 6, characterised in that the projections (27) have a thickness which is at most equal to the thickness of the edges (4) of the bar defining the inlet (3) of the T-shaped groove (2) on the longitudinal face.

8. Unit as claimed in Claim 1 or 2, characterised in that the lateral face opposite the one having the clearances has cut-outs (28) of matching shape which are aligned with the projections of the opposing lateral face.

9. Unit as claimed in Claim 1 or 2, characterised in that one at least of the faces (11, 12) has a recessing (40) set in which leaves a peripheral supporting rim (41) remaining.

10. Unit as claimed in Claim 1, characterised in that the holes (20b) open on the face (11) by negative imprints (42) which are capable of retaining crimped captive nuts.

11. Unit as claimed in Claim 1, 2 or 3, characterised in that the face (12) has a clearance (43) between the projections (24).

12. Assembly of profiled bars comprising at least two bars (B₁, B₂) of which one is provided at the end of at least one unit as claimed in one of Claims 1 to 8 and the other is fixed to the said unit by one of its longitudinal faces offering at least one T-shaped groove.

13. Assembly of profiled bars comprising at least two bars (B1, B2) which extend orthogonally in two parallel planes end are fixed to one another by at least one unit as claimed in one of Claims 1 to 11, are adapted on the mutually facing longitudinal faces and each have at least one T-shaped groove.

14. Assembly of profiled bars comprising two bars (B₁, B₂) fixed end to end by means of two units as claimed in one of Claims 1 to 11.
